# EUROPÄISCHE PATENTANMELDUNG

(11) **EP 0 651 949 A1**
(43) Veröffentlichungstag der Anmeldung: **10.05.1995**
(21) Anmeldenummer: 94203203.8
(22) Anmeldetag: 03.11.1994
(51) Int. Cl.: A23L 1/227, A23C 19/093

(54) **Verfahren für die Herstellung eines Produkts mit Käsegeschmack**

(30) Priorität: 04.11.1993 NL 9301906
(71) Anmelder: Zuivelonderneming De Vijfheerenlanden B.V., NL-4145 ZG Schoonrewoerd (NL)
(72) Erfinder: Engels, Willem Johannes Maria, NL-5993 XJ Maasbree (NL); Visser, Servaas, NL-6713 MT Ede (NL)
(74) Vertreter: de Bruijn, Leendert C.

(57) **Zusammenfassung**

Beschrieben wird ein Verfahren zur Herstellung eines Produkts mit Käsegeschmack durch Inkubation von einer oder mehreren Aminosäuren mit einer beim Aufbrechen von Zellen von Milchsäurebakterien erhältlichen löslichen Fraktion, wobei man die Aminosäure in einer Konzentration von wenigstens 0,2 mmol/l und die lösliche Fraktion einem Grundmaterial hinzufügt. Die Aminosäure ist beispielsweise Methionin oder Phenylalanin. Ebenfalls wird ein Käsearomakonzentrat beschrieben, das für die Herstellung eines Produkts mit Käsegeschmack geeignet ist, das wenigstens eine Aminosäure und eine beim Aufbrechen von Zellen von Milchsäurebakterien und etwaigen anderen Bakterien zu erhaltende lösliche Fraktion, oder aber das nach der Inkubation der Aminosäure und der löslichen Fraktion erhaltene Gemisch, enthält.

## Beschreibung

Die Erfindung betrifft ein Verfahren für die Herstellung eines Produkts mit Käsegeschmack, insbesondere Käse.

Aus der niederländischen Patentanmeldung 7204793 ist es bekannt, bei Käseprodukten das Käsearoma zu verbessern, indem ein Gemisch aus wenigstens 3 Aminosäuren beigegeben wird, gewählt aus Glutaminsäure, Glycin, Lysin, und Methionin in bestimmten Verhältnissen, wobei statt Glycin auch Alanin oder Prolin verwendet werden können. Auf diese Weise würde das Aroma von gereiftem Blaukäse, Cheddar oder Emmentaler Käse erhalten werden können. Die einzelnen Komponenten werden nach diesem Verfahren lediglich gemischt, ohne weitere Reaktion.

Nach der deutschen Patentanmeldung 3318955 kann man ein konzentriertes Käse-Aroma durch Homogenisierung und Erhitzung eines Gemisches aus Käsematerial, aus tierischem Eiweiß stammenden Aminosäuren, Natriumglutamat, Natriuminosinat und Natriumguanylat, pflanzlichem Eiweißhydralysat, Zuckern, Kräuterkonzentraten und ätherischen Ölen erstellen. Mit diesen konzentrierten Aromen könnten Nahrungsmittel mit einem Käsegeschmack versehen werden.

Bei den bekannten Verfahren für die Herstellung eines Käsegeschmacks werden lediglich Komponenten einem Käsematerial hinzugefügt, ohne weitere nennenswerte Umsetzungen. Dadurch sind die Möglichkeiten zur Lenkung und Entwicklung des Geschmacks und der Geschmackseffekte beschränkt.

Herausgefunden wurde nunmehr, daß ein Käsegeschmack durch ein teilweise enzymatisches Verfahren erhalten werden kann, wobei eine oder mehrere bestimmte Aminosäuren mit einer beim Aufbrechen von Zellen von Milchsäurebakterien zu erhaltenden lösbaren Fraktion inkubiert werden. Auch wurde herausgefunden, daß dabei die Geschmacksentwicklung gelenkt werden kann, in Abhängigkeit von der gewünschten Stärke und des gewünschten Typs des Geschmacks. Weiter hat sich herausgestellt, daß die Entwicklung des Käsegeschmacks bei einer solchen Inkubation erheblich beschleunigt wird, wodurch die üblichen langen Reifezeiten verkürzt werden können.

Die Erfindung betrifft somit ein Verfahren zur Herstellung eines Produkts mit Käsegeschmack, wobei man die Aminosäure oder die Aminosäuren und eine beim Aufbrechen von Zellen von Milchsäurebakterien zu erhaltende lösliche Fraktion in einem Grundmaterial anwesend sein läßt und das erhaltene Material inkubiert. Die Aminosäure fügt man bis zu einer minimalen Gesamtkonzentration von 0,2 mmol/l, vorzugsweise wenigstens 0,5 mmol/l insbesondere bis zu etwa 2,5 mmol/l zu.

Unter einem Grundmaterial werden Materialien verstanden, die je nach dem beabsichtigten Verwendungszweck, Käsegeschmack bildende Komponenten oder Substitute davon und/oder Trägermaterialien oder ergänzende Komponenten für ein Produkt mit Käsegeschmack enthalten, insbesondere diejenigen Komponenten, die nicht oder in unzureichendem Umfange in der löslichen Fraktion vorhanden sind. Das Grundmaterial kann eines des bei dem erfindungsgemäßen Verfahren zu verwendenden Materialien, beispielsweise eine oder mehrere Aminosäuren, bereits enthalten, wobei man dann die fehlende Menge der Materialien hinzufügt und das Ganze inkubiert. Wenn das bezweckte Produkt beispielsweise ein konzentriertes Käse-Aroma ist, so kann das Grundmaterial ein wohl oder nicht gereiftes Käsepulver, geschmolzener Käse, oder ein Käseextrakt sein. Wenn das beabsichtigte Produkt ein Käse ist, kann man als Grundmaterial eine (Käse) Milch, Käsebruch oder geschmolzenen Käse verwenden.

Das Grundmaterial kann auch von einem neutralen Träger wie Wasser oder einem anderen für die Inkubation geeigneten Medium, das gleichzeitig mit der löslichen Fraktion angebracht wird, gebildet werden. Auf diese Weise kann das erfindungsgemäße Verfahren aus dem Zusammenführen und Inkubieren einer löslichen Bakterienfraktion und einer oder mehreren Aminosäuren bestehen, was zu einem Käsegeschmackskonzentrat führt, das dazu verwendet werden kann, unterschiedliche Nahrungsmittel mit einem Käsegeschmack zu versehen oder deren Käsegeschmack zu stärken oder zu lenken.

Unter einer beim Aufbrechen von Zellen von Milchsäurebakterien zu erhaltenden löslichen Fraktion wird hier eine von Milchsäurebakterien stammende Fraktion verstanden, die auf jeden Fall die in Wasser löslichen Bestandteile der aufgebrochenen Bakterien zum größten Teil enthält. Die Fraktion enthält wohl vorwiegend die mit Wasser extrahierbaren oder in Wasser löslichen Bestandteile, wie Enzyme, Kohlenhydrate usw. Es kann sich dabei um einen zellenfreien Extrakt der Bakterien handeln. Auch können ganze Zellen verwendet werden, wenn daraus während der Inkubation mit der Aminosäure die löslichen Stoffe leicht in Lösung gehen, beispielsweise weil die Zellen in der Weise vorbehandelt sind, daß die Zellenwand geschwächt ist.

Die Milchsäurebakterien können von den bekannten Gattungen sein, wie *Lactococcus*, *Streptococcus*, *Lactobacillus*, *Leuconostoc* und *Pediococcus*. Vorzugsweise wendet man funktionale Milchsäurebakterien an, das heißt Milchsäurebakterien, die eine Funktion bei der Käsebereitung erfüllen, wie Säurewecker. Insbesondere werden mesophile Milchsäurebakterien bevorzugt, wie die Arten *Lactococcus lactis* (Subsp. *lactis*, Subsp. *cremoris* oder Subsp. *lactis* Biovar. *diacetylactis*) und *Leuconostoc lactis* und *Leuc. mesenteroides.* Besonders geeignet sind Milchsäurebakterien der Gattung *Lactococcus,* insbesondere der Art *Lactococcus lactis.* Zum Erhalt der erwünschten Geschmacksrichtung oder Geschmacksstärke kann es wichtig sein, einen bestimmten Stamm der vorstehend genannten Bakterien auszuwählen.

Vorteilhaft verwendet man eine lösliche Fraktion, die aus einer Zellensuspension mit einer Extinktion bei 650 nm nach 125-facher Verdünnung mit entmineralisiertem Wasser von wenigstens 0,3, vorzugsweise 0,4, oder aber aus einer Zellensuspension mit etwa 10¹⁰ Zellen pro ml Suspension erhalten ist.

Die Aminosäure die man nach diesem Verfahren inkubieren läßt, kann eine einzelne Aminosäure sein oder auch ein Gemisch aus Aminosäuren. Vorzugsweise verwendet man Methionin und/oder Phenylalanin und/oder Leucin, gegebenenfalls zusammen mit anderen Aminosäuren. Insbesondere verwendet man als hinzuzufügende Aminosäure Methionin und/oder Phenylalanin und mehr vorzugsweise Methionin, gegebenenfalls zusammen mit einer oder mehreren anderen Aminosäuren. Vorzugsweise wendet man von der Aminosäure oder von dem Gemisch aus Aminosäuren 0,01-0,1 Gew.% insbesondere 0,01-0,04 Gew.% im Vergleich zu dem Grundmaterial an. Auch kann eine Vorzugsmenge Aminosäuren in einer Konzentration von 0,5 - 2,5 mmol/l verwendet werden. Die Aminosäure kann auch indirekt hinzugefügt werden, beispielsweise durch die Verwendung von Bakterien, die genetisch derart geändert sind, daß sie die jeweilige Aminosäure in erhöhtem Maße im Inkubationsmedium aussondern.

Die Inkubation von Aminosäure und löslicher Fraktion führt man so lange und unter solchen Bedingungen durch, daß die Aminosäuren in ausreichendem Umfange in Geschmacksstoffe umgesetzt werden; im Falle von Methionin handelt es sich beispielsweise um die Bildung von unter anderem Dimethyldisulfid, Dimethyltrisulfid, Methanthiol und Wasserstoffsulfid. Es kann vorteilhaft sein, die Inkubation in Anwesenheit eines geeigneten Cofaktors durchzuführen, insbesondere Pyridoxalphosphat, um die Bildung von Geruchs- und Geschmacksstoffen zu fördern.

Die lösliche Bakterienfraktion und die Aminosäuren können, im Falle der Käsebereitung, direkt der Käsemilch oder dem Käsebruch beigegeben werden. Bei Verfahren, bei denen nach dem Gerinnen eine Behandlung mit Wasser oder einer anderen Flüssigkeit vorgesehen ist, wie bei der Herstellung von Gouda-Käse, fügt man der Bakterienfraktion und den Aminosäuren vorzugsweise in der Weise hinzu, daß sie vorwiegend in dem Käsebruch zurückbleiben. Für Aminosäuren kann dies beispielsweise herbeigeführt werden, indem diese an einem festen Träger absorbiert werden.

Die lösliche Bakterienfraktion kann beispielsweise in Form geschwächter ganzer Zellen hinzugefügt werden. Die Schwächung kann auf enzymatischem Wege oder durch thermische Behandlung ausgeführt werden. Die Bakterien haben dabei noch eine ausreichende Festigkeit, um als solche in das Grundmaterial aufgenommen werden zu können. In einem Folgeschritt des Käsebereitungsverfahrens, beispielsweise dem Pökeln und Reifen, werden die Bakterien zerlegt, wodurch die lösliche Fraktion freigesetzt wird. Auf diese Weise können beispielsweise 10⁸ - 10¹⁰ cfu geschwächte Milchsäurebakterien pro g Käse entstehen. Die Hinzufügung von mittels eines Hitzeschocks vorbehandelter Bakterien ist an sich bekannt, beispielsweise von Bartels u.a., Milchwissenschaft, **42**, 83-88 (1987).

Weiter können sowohl die Aminosäuren als auch die lösliche Bakterienfraktion auf andere Weise verkapselt und dem Grundmaterial hinzugefügt werden. Dazu kann beispielsweise Milchfett als Verkapselungsmaterial verwendet werden, wie dies unter anderem von Magee und Olson, J. Dairy Sci. **64**, 600-621 (1981) und von Kim und Olson, J. Dairy Sci. **56**, 799-811 (1989) beschrieben worden ist. Auch können zum Verkapseln von Aminosäuren und/oder löslicher Bakterienfraktion Liposome verwendet werden (siehe beispielsweise Kirby, C.J. u.a., Int. J. Food Sci. & Techn. **22**, 355-375 (1987)). Die Aminosäuren oder aber die lösliche Bakterienfraktion kann in an sich bekannter Weise in Liposome aufgenommen werden, dies durch Dispergierung von Phospholipiden in einer Aminosäurelösung beziehungsweise in einem zellenfreien Extrakt von Milchsäurebakterien, mit anschließendem Trocken und erneuter Aufnahme in Wasser. Wenn sowohl Aminosäure als auch Bakterienfraktion so hinzugefügt werden, werden diese vorzugsweise gesondert in Liposomen verkapselt und hinzugefügt. Solche Liposome bleiben beim Gerinnen und bei der Synerese von Käse intakt, wonach beim Pökeln und beim Reifen des Käses der Inhalt der Liposome freigesetzt wird.

Die Erfindung betrifft ebenfalls ein Käse-Aroma-Konzentrat, das für die Herstellung eines Produkts mit Käsegeschmack geeignet ist, welches Konzentrat wenigstens eine Aminosäure und eine beim Aufbrechen von Zellen von Milchsäurebakterien zu erhaltende lösliche Fraktion enthält. Neben den Milchsäurebakterien können dabei auch Bakterien der Gattung *Pseudomonas* oder *Brevibacterium,* insbesondere der Art *Brevib. linens* verwendet werden, weil die in der Kombination mit Aminosäuren, beispielsweise Methionin, eine wertvolle Geschmackskomponente erzeugen können. Erforderlichenfalls kann das auf diese Weise erhaltene Konzentrat, vor der weiteren Verarbeitung, erhitzt werden, um etwaige negative Geschmacksbildung in dem Nahrungsmittel zu vermeiden.

Das Käse-Aromakonzentrat kann auch das durch Inkubation der Aminosäure und der löslichen Fraktion erhaltene Gemisch enthalten. Bei der Inkubation können auch andere geschmacksbildende Komponenten, wie Carbonylverbindungen anwesend sein. Das Konzentrat kann beispielsweise die Form einer Lösung, einer Dispersion oder eines getrockneten Präparats haben.

Die Erfindung betrifft weiter ein Käseprodukt, das mit dem vorstehend beschriebenen Verfahren erhalten werden kann. Es kann dabei ein an sich bekannter Käsetyp sein, beispielsweise Gouda-Käse oder Cheddar, der beschleunigt gereift ist und/oder der eine erhöhte Konzentration an geschmacksbildenden Abbauprodukten von Aminosäuren enthält. Es kann auch ein Käse-Aromakonzentrat sein, das dazu verwendet werden kann, unterschiedliche Nahrungsmittel wie Soßen, Suppen, Chips, Mehlspeisen, Schmiernahrung, Fette usw. mit einem Käsegeschmack zu versehen, oder aber ein solches Nahrungsmittel selbst sind.

### Beispiel I

Aus der Mitte eines drei Monate alten Gouda-Käses wurde eine Menge Käse herausgenommen, die unter Stickstoff vermahlen und in Portionen von 50 g verteilt wurde. Vier Portionen wurden a) 2 ml Wasser, b) 2 ml einer Lösung von 10 g Methionin in Wasser, c) 2 ml eines konzentrierten zellenfreien Extrakts (> 500 Da) von Milchsäurebakterien (*Lc*. *lactis cremoris*) und d) 2 ml einer Lösung von 10 mg Methionin in dem gleichen zellenfreien Extrakt von Milchsäurebakterien zugefügt. Die Proben wurden in vakuumgesaugten Kunststoffsäcken 11 Tage bei 18 °C im Dunkeln inkubiert. Alle Bearbeitungen wurden aseptisch durchgeführt.

Danach wurden die Proben von Prüfern auf den Geschmack hin geprüft. Alle Proben hatten mehr Geschmack als der vergleichbare Gouda-Käse und der Käsegeschmack wurde in der nachfolgenden Reihenfolge als stärker beurteilt: a) = b) < c) < d). Nach drei Wochen bei 18 °C war die Reihenfolge der Gouda-Käse-Intensität a) < b) <c) <d).

### Beispiel II

Beispiel I wurde mit zwei Wochen altem Gouda-Käse wiederholt. Die Inkubation erfolgte bei 18 °C während 17 Tagen. 13 Versuchspersonen ordneten die vier Proben a), b), c) und d) nach der Käsegeschmacksintensität (von 1 bis 4) ein. Die Summe der Einordnungen war: a): 13, b): 30, c): 41, d): 46. Die Paste mit der Kombination von zellenfreiem Extrakt und Methionin (d) weist signifikant (99 % Zuverlässigkeit) mehr Käsegeschmack als die anderen Proben auf. Der Geschmack dieser Paste scheint dem des Gouda-Käse am meisten nahezukommen.

### Beispiel III

Ein zellenfreier Extrakt (CFE), erhalten aus Zellen von *Lactococcus lactis* Subsp. *cremoris,* woraus Komponenten mit einem Molekülgewicht von < 500 Da mittels Diafiltrierung entfernt worden waren, wurde 1 Woche aerob mit Methionin inkubiert (25 °C, pH = 6, 0,1 % NaCl), wobei die Konzentration der Aminosäure und die Konzentration des bakteriellen Materials den bei der Reife von Gouda-Käse gängigen Werten entsprechen. Eine Prüfgruppe probierte die Proben im Vergleich zu einer Referenz einer Fraktion von UF < 500 Da aus sechs Monate altem Gouda-Käse und kam zu dem Urteil, daß ein Konzentrat mit Gouda-Käse-Geschmack erhalten worden war, wie in der nachstehenden Tabelle A angegeben.

### Beispiel IV

### Käse-Aromakonzentrat

Nach dem Verfahren von Beispiel III wurden Inkubationen durchgeführt (7 Tage, 25 °C, Methioninkonzentration 2 mM). Dabei wurde außer dem unmittelbar erhaltenen zellenfreien Extrakt (> 500 D) auch achtfach konzentriertes CFE verwendet. Die Ergebnisse sind in Tabelle B dargestellt.

Das zweite Gemisch nach Tabelle B (CFE 8x + Methionin) wurde mit Wasser und Tomatensaft ("Zontomaatje") in einem Volumenverhältnis von 3:1:2 vermischt. Der Geschmack dieses Gemisches wurde von einem Panel als voller, süßer, schmackhafter und mehr Bouillon- und Käseartig als der Geschmack von dreifach mit Wasser verdünnter Tomatensaft umschrieben.

**Tabelle A**

| Käsegeschmacksintensität eines durch Inkubation von zellenfreiem Extrakt und 2 mmol/l Methionin erhaltenem Gemisches | |
|---|---|
| CFE(1) | Käsegeschmacksintensität (relativ) |
| 0,0 | 0 |
| 0,5 | 0,11 |
| 1,0 | 0,62 |
| 2,0 | 1,0 |

| | |
|---|---|
| (1) Multiplikationsfaktor CFE 1,0 = CFE erhalten aus einer Zellensuspension mit, nach der 125-fachen Verdünnung, einer Extinktion bei 650 nm von 0,35. | |

**Tabelle B**

| Probe | Geruch/Geschmack (0-10) | Geschmacksintensität | Geschmacksart |
|---|---|---|---|
| CFE + Meth. | 6 | 0,4 | blumig, früchtig ziemlich niedrig |
| CFE 8x + Meth. | 7 | 2 | alter Gouda-Käse, Proosdij, blumig |
| CFE 8x + Meth. 8x verdünnt nach Inkubation | 7 | 1,5 | Proosdij, blumig, Diacetyl, Bouillon |
| CFE 8x + Wasser | 6 | 0,3 | esterartig, Proosdij, blumig |
| Wasser + Meth. | 5 | 0,1 | keine |

### Beispiel V

Ein zellenfreier Extrakt (CFE) wurde auf nachstehende Weise hergestellt.
- 20 l bei hoher Temperatur pasteurisierte Milch wurde mit 300 ml einer Vorkultur von *Lactococcus lactis* ssp. *cremoris* B78 beimpft.Der Zellenwuchs fand übernacht bei 30°C statt. Während des Zellenwuchses wurde der pH durch Zusatz einer Lösung von 10% Na₂CO₃ (M/V) und 10% NH₄OH (V/V) auf 6,5-6,6 gehalten. Zur Förderung des Wachsens wurde Stickstoff durchgeführt. Die Kultur wurde ruhig gerührt.
- Nach 16 Stunden wurde eine optische Dichte der Zellen bei 600 nm von etwa 5 gemessen. Aus experimentellem Grund wurde diese Dichte für ausreichend (Ende der Logphase) gehalten.
- Die Zellen wurden geerntet durch Klärung mit Natriumcitrat (220 g) und Zentrifugierung (4700 rpm, 40 min, 4°C). Das Pellet enthielt noch Casein und wurde deshalb zweimal mit 0,1 M Natriumphosphatpuffer gewaschen. Das endgültige Pellet (Zellenmasse) war weiß. Die Zellen wurden in 600 ml Wasser resuspendiert. Die OD₆₅₀ der Suspension war 360. Im Vergleich zu der bei in vitro-Inkubationen verwendeten Suspension (OD₆₅₀ nach 125-facher Verdünnung = 0,35) ist dies die etwa 10-fache Konzentration.
- Die Zellen wurden in einem Rannie-APV-Homogenisator, Modell Minilab, Typ 8.30H zerstört. Für eine Zerstörung von 80-90% der Zellen reichten 4 Durchläufe im Homogenisator bei 800 bar aus. Der CFE (500 ml) wurde durch Zentrifugierung (15000 g, 30 min, 4°C) des Homogenats erhalten. Die Aktivität des intracellularen Enzyms Lactatdehydrogenase (LDH) im CFE war vergleichbar mit derjenige des mittels Ultraschall hergestellten CFE.

Der Käsebruch wurde mit den nachstehenden Lösungen versetzt:

| Nr. | während Aufbereitung zugesetzt | Zusatz pro Käse von 5 kg |
|---|---|---|
| 1 | 375 ml Wasser | 125 ml Wasser |
| 2 | 250 ml Wasser + 1,8 g Methionin | 125 ml Wasser + 0,9 g Meth. |
| 3 | 250 ml CFE | 125 ml CFE |
| 4 | 250 ml CFE + 1,8 g Methionin | 125 ml CFE + 0,9 g Methionin |

Die Zugabe zum Bruch fand aseptisch durch Verneblung statt. Aus jeder Bruchportion wurden zwei Käse von 5 kg hergestellt, es wurden aber auch drei Referenzkäse (Zusatz 1) hergestellt. Dieser zusätzliche Käse wurde für die Analysen (Feuchtigkeit, E. coli) eingesetzt. Pro Käse wurden das Äquivalent von etwa 10¹³ Zellen (Verdoppelung hinsichtlich Referenz, mit Rücksicht auf den Verlust in der Molke) und 100% zusätzliches Methionin (hinsichtlich Referenz) zugesetzt. Die Angaben sind Schätzungen.

Die Käsebereitung erfolgte wie nachstehend:
1. Käsebereitung (4 x 200 l pasteurisierte Milch mit Bos gerinnen und versauern lassen)
2. Bruch mit Tilsitersiebe aussieben und über 2 Behälter verteilen (5 kg/Behälter, Käse Nr. 1 über 3 Behälter verteilen)
3. Zusätze schnell von den Bruch mischen (aseptisch)
4. Pressen
5. Pökeln (64 Stunden)
6. Reifen (insgesamt 13 Wochen)

Die Bruchbereitung und die weitere Bearbeitung der Käse nach den Zugaben (Pressen usw.) erfolgte nach dem für Gouda-Käse herkommlichen Verfahren.

### Ergebnisse

Die chemischen und physischen Parameter der Käse waren mit herkömmlich gereiftem Gouda-Käse vergleichbar. Nach 6 Wochen und nach 3 Monaten wurde der Käse mit CFE und Methionin (Nr. 4) vom Prüfungspanel für Geruch und Geschmack als höchste bewertet. Nach 6 wochen war dieser Käse weniger flach und hatte etwas ausgeprägteren Mittelaltergeschmack als die übrigen Käse. Nach 3 Monaten zeichnete sich dieser Käse hinsichtlich Geschmack deutlich vor dem normalen Gouda-Käse aus. Der Käse kennzeichnete sich durch einen süßen, bouillonartigen und würzigen Geschmack.

Im Allgemeinen waren alle Käse ziemlich herb. Es ist nicht klar was diesen Defekt bewirkte. Die mit CFE versetzten Käse (Nr. 3 und 4) waren weniger herb als die zwei andere.

Wenn die Käse als "neuer Käse" beurteilt wurden, wurde der Käse Nr. 4 (mit CFE und Methionin) nach 3 Monaten als beste bewertet.

## Patentansprüche

1. Verfahren zur Herstellung eines Produkts mit Käsegeschmack durch Inkubation einer oder mehrerer Aminosäuren mit einer beim Aufbrechen von Zellen von Milchsäurebakterien erhältlichen löslichen Fraktion, wobei man die Aminosäure in einer Konzentration von wenigstens 0,2 mmol/l und die lösliche Fraktion in einem Grundmaterial anwesend sein läßt.

2. Verfahren nach Anspruch 1, wobei die lösliche Fraktion ein zellenfreier Extrakt ist.

3. Verfahren nach Anspruch 1 oder 2, wobei die Aminosäure Methionin, Phenylalanin und/oder Leucin ist.

4. Verfahren nach Anspruch 3, wobei die Aminosäure Methionin ist.

5. Verfahren nach irgendeinem der Ansprüche 1 - 4, wobei die Milchsäurebakterien funktionale Milchsäurebakterien sind.

6. Verfahren nach Anspruch 5, wobei die Milchsäurebakterien die Art *Lactococcus lactis* enthalten.

7. Verfahren nach irgendeinem der Ansprüche 1 - 6, wobei man die Aminosäure in einer Konzentration von 0,5 - 2,5 mmol/l anwesend sein läßt.

8. Verfahren nach irgendeinem der Ansprüche 1-7, wobei man eine lösliche Fraktion hinzufügt, die aus einer Zellensuspension mit einer Extinktion bei 650 nm nach 125 x Verdünnen von wenigstens 0,3, vorzugsweise 0,4, erhalten ist.

9. Käse-Aromakonzentrat, geeignet für die Herstellung eines Produkts mit Käsegeschmack, das wenigstens eine Aminosäure und eine beim Aufbrechen von Zellen von Milchsäurebakterien und etwaigen anderen Bakterien zu erhaltende lösliche Fraktion, oder aber das nach der Inkubation der Aminosäure und der löslichen Fraktion erhaltene Gemisch, enthält.

10. Nahrungsmittel, hergestellt durch Anwendung des Verfahrens nach irgendeinem der Ansprüche 1 - 8.
